# EUROPEAN PATENT SPECIFICATION

(11) **EP 1 179 982 B1**
(45) Date of publication and mention of the grant of the patent: **01.10.2003**
(21) Application number: 00908860.0
(22) Date of filing: 07.03.2000
(51) Int. Cl.: A01N 57/20, A01N 37/36, A01N 31/02

(54) **HERBICIDAL COMPOSITION**
HERBIZIDE ZUSAMMENSETZUNG
COMPOSITIONS HERBICIDES

(30) Priority: 11.03.1999 US 123989 P
(43) Date of publication of application: 20.02.2002
(73) Proprietor: Ecoval Corporation, Elmira, Ontario N3B 1B9 (CA)
(72) Inventor: LOJEK, John, S., Elmira, Ontario N3B 1B9 (CA)
(74) Representative: Asquith, Anthony
(86) International application number: CA0000238
(87) International publication number: WO00053018

(56) References cited:
- EP-A- 0 579 052
- EP-A- 0 968 649
- WO-A-97/00010
- WO-A-99/55155
- DE-A- 4 030 687
- US-A- 5 705 455
- WYRILL J B ET AL: "GLYPHOSATE TOXICITY TO COMMON MILKWEED AND HEMP DOGBANE AS INFLUENCED BY SURFACTANTS" WEED SCIENCE,US,WEED SCIENCE SOCIETY OF AMERICA, CHAMPAIGN, IL, vol. 25, no. 3, 1 May 1977 (1977-05-01), pages 275-287, XP002034447 ISSN: 0043-1745
- DATABASE CHEMABS [Online] CHEMICAL ABSTRACTS SERVICE, COLUMBUS, OHIO, US D.J.TURNER ET AL.: "Complexing agents as herbicide additives" retrieved from STN-INTERNATIONAL, accession no. 89:158688 CA XP002139892 & WEED RES., vol. 18, no. 4, 1978, pages 199-207, ISSN: 0043-1737

## Description

### Field of the Invention

The present invention relates to aqueous herbicidal compositions and, in particular embodiments to aqueous herbicidal compositions in which the combination of ingredients in the herbicidal composition exhibits synergistic herbicidal properties. In particular, the present invention relates to the use of synergistic combinations of acetic acid, citric acid, glyphosate and surfactant and/or alkyl polyoxyethylene glycol ether.

### Background of the Invention

Many herbicidal compositions exist which are effective in killing all vegetation or selected vegetation. Many such herbicidal compositions are based on chemicals with complex structures, some of which are toxic to other life forms.

Combinations of active herbicidal ingredients with surfactants to achieve a better weed control are known. Such combinations can provide specific benefits e.g. better spreading on or wetting of foliage. Surfactants in combination with appropriate toxins are registered for use as herbicides.

Even though certain herbicides may be mixed to provide better overall weed control, this in not possible with other herbicides. One of the latter is glyphosate, which is effective on many weeds but less so on dandelions, which tend to be damaged but not killed. The surviving plants tend to re-grow. To overcome this problem, attempts have been made to combine glyphosate with other post-emergence herbicides e.g. 2,4-D. Synergistic combinations were not obtained, and antagonistic responses were observed.

Other attempts have been made to improve the rate of visible damage by glyphosate alone by addition of surfactant. However, even literature on a known formula that is referred to as a "fast acting formula" states that visible symptoms such as browning or yellowing of leaves will occur within one or two days. With dandelions, it usually takes 3-4 days for these visible symptoms to occur.

The combination of acetic and citric acid is known as a non-selective herbicide. For example, combinations of acetic acid and citric acid exhibit synergistic herbicidal properties compared to acetic acid and citric acid alone, as disclosed in U.S. 5705455. However, even though the combination produces rapid top kill, most perennial weeds rapidly re-grow, thereby requiring multiple applications. Improvement in re-grow control would have significant benefits. The present registered rate of application for the combination of acetic acid and citric acid requires a substantial amount of active ingredients, making it too expensive for other than spot applications of the herbicidal composition. Large scale use would require a much more active combination of ingredients to be economical.

Further combinations with glyphosate or acetic acid are known.

The influence of various surfactants on the toxity of glyphosate is discloses in Weed Science, Vol. 25(3), 1977. It is described that the surfactants Renex 30, Plurafac A-46 and Trydet TFA-11 have a synergistic effect on the toxicity of glyphosate.

From Chemical Abstracts Vol. 89, 158688 it is known that glyphosate is activated by citric acid and other complexing agents.

DE-A-4030687 discloses that acetic acid in combination with surfactants is useful as a herbicide.

The use of known adjuvants as accelerators for plant protection agents is described in EP-A-579052. The described adjuvants are nonionic surfactants which act to aid in the penetration of the active ingredient into the plant.

WO-A-97/00010 dicloses the use of alcohol surfactants with glyphosate.

It is known that certain herbicidal soaps can be used for post emergence herbicidal applications. However, these products do not prevent re-growth, unless the roots of such weeds as dandelions are split prior to application and the herbicide is poured on the damaged root. This makes it impractical to use these products as perennial weed control agents.

### Summary of the Invention

Herbicidal compositions have now been found that are effective against a variety of types of weeds, aspects of which are effective in preventing re-growth of certain perennial weeds.

Accordingly, an aspect of the present invention provides a herbicidal composition comprising a combination of glyphosate, acetic acid, citric acid and surfactant in aqueous solution, said composition exhibiting synergistic herbicidal activity in comparison with aqueous solutions of any of (i) glyphosate, (ii) acetic acid in combination with citric acid and (iii) surfactant at the same concentration.

Another aspect of the present invention provides a herbicidal composition comprising a combination of glyphosate, acetic acid, citric acid and alkyl polyoxyethylene glycol ether in aqueous solution, said composition exhibiting synergistic herbicidal activity in comparison with aqueous solutions of any of (i) glyphosate, (ii) acetic acid in combination with citric acid and (iii) alkyl polyethylene glycol ether at the same concentration.

The present invention also provides use of such herbicidal compositions, especially in post-emergence applications.

### Detailed Description of the Invention

The present invention relates to aqueous herbicidal compositions, and particularly to herbicidal compositions in which the combination of ingredients exhibits synergistic effects as a herbicide. Such synergistic compositions exhibit more effective herbicidal activity than a corresponding composition of any of the ingredients alone in aqueous solution. In addition it has been found that some herbicidal compounds e.g. glyphosate, may be used in combination with other ingredients at concentrations that are less than the concentrations generally understood to be effective and for which such herbicide is registered.

An embodiment of the present invention provides a herbicidal composition according to claim 1 which comprises alkyl polyoxyethylene glycol ether in aqueous solution. An example of an alkyl polyoxyethylene glycol ether is Witconol™ SN-90, which is available from Witco.

In another embodiment of the invention, the herbicidal composition comprises a combination of glyphosate, acetic acid, citric acid and surfactant in a clear solution. The composition exhibits synergistic herbicidal activity in comparison with any of the ingredients in aqueous solution at the same concentration. For instance the composition exhibits synergistic activity compared with glyphosate, with acetic acid in combination with citric acid and with surfactant at the same concentrations in aqueous solution.

A further embodiment provides a herbicidal composition comprising a combination of glyphosate, acetic acid, citric acid and alkyl polyoxyethylene glycol ether in aqueous solution. The composition exhibits synergistic herbicidal activity compared with glyphosate, with acetic acid in combination with citric acid and with alkyl polyoxyethylene glycol ether at the same concentrations in aqueous solution.

The weight ratio of acetic acid to citric acid in the herbicidal composition may vary over a wide range, for instance, in the range of from about 10:1 to about 1:1, preferably in the range, of 4:1 to 1:1, on a weight basis. In embodiments, the weight ratio of acetic acid to citric acid is in the range of 4:1 to 2:1.

The herbicidal composition in use may contain up to 100 g/l of acetic acid and 50 g/l of citric acid, with the preferred amount of acetic acid being up to 10 g/l and especially up to 4 g/l. The composition should contain at least 1 g/l of acetic acid and 0.5 g/l of citric acid in the herbicidal composition. Preferred compositions contain about 4 g/l acetic acid and 2 g/l of citric acid.

A wide variety of surfactants may be used. However, a particularly preferred surfactant is available as Sponto™ 300T. The amount of surfactant should be in the range of 0.1-40 g/l, preferably 1-5 g/l.

The registered dosage rate for the glyphosate available as Roundup™ is 7 g/l in aqueous solution. In the present invention, the amount of glyphosate should be less than 5 g/l, and especially less than 4 g/l.

The herbicidal compositions of the present invention may be formulated for use with a variety of vegetation. In particular, the herbicidal compositions may be formulated for use against perennial weeds, especially dandelions. The compositions may be formulated to prevent re-growth of such weeds. However, as exemplified herein, the compositions may be formulated with a variety of other types of vegetation.

It is to be understood that the effectiveness of herbicidal compositions disclosed herein may vary with the type of plant that is being treated. While compositions illustrated herein are generally effective against weeds, perennials and grass, it is also illustrated herein that compositions containing alkyl polyoxyethylene glycol ether are particularly effective against herbaceous (woody) plants, as exemplified by poinsettias. As illustrated, a composition disclosed herein as being effective against dandelions was not effective against herbaceous plants.

The present invention provides synergistic combinations of ingredients that act as herbicidal compositions. In some instances, the ingredients are known to act as herbicides, but at concentrations substantially above those found to be effective in combination according to the present invention. Thus, in one aspect of the present invention, reduced amounts of known herbicides may be used with consequently reduced effects of toxicity, if present, with respect to other life forms. In other aspects of the invention, the combinations provide for increased herbicidal activity at similar concentrations, thereby rendering the herbicide more effective in application.

The present invention is illustrated by the following examples:

### Example I

Individual well established dandelion plants growing in a field were marked and then sprayed with different herbicidal compositions until the liquid of the composition ran off the leaves of the dandelion plants. Each experiment was replicated four times i.e. four different dandelion plants were sprayed with each composition.

The glyphosate of Run 2 was used at the registered rate of application for this herbicide.

The plants were observed for initial top kill and subsequent re-growth, after 1, 7 and 28 days.

The results obtained are shown in Table I.

**Table I:**

| **Field Results - Dandelions** | | | |
|---|---|---|---|
| **Run** | **Solution** | **% Top Kill (7 days)** | **% Regrowth (28 days)** |
| 1 | 50 g aa + 25 g ca + 1 g Sponto/1000 ml water | 95 | 60 |
| 2 | Glyphosate 7 g/1000 ml water | 60 | 50 |
| 3 | 25 g aa + 12.5 g ca + 1 g Sponto + 7 g glyphosate/1000 ml water | 100 | 0 |
| 4 | 6 aa + 3 g ca + 1 g Sponto + 3.5 g glyphosate/1000 ml water | 100 | 5 |
| Note: | | | |
| aa = acetic acid | | | |
| ca = citric acid | | | |
| glyphosate = Roundup® Reg. No. 24,299 (P.C.P. Act), used as isopropylamine salt | | | |
| SN-90 = Witconol SN-90 from Witco, an alkyl polyoxyethylene glycol ether | | | |
| Sponto = Sponto™300T from Witco | | | |

Results clearly show that neither glyphosate at registered rate of 7g/litre nor the combination of acetic acid plus citric acid prevented re-growth of dandelions, even though both herbicides caused leaf damage. The acetic acid plus citric acid combination (Run 1) showed initial damage in less than 24 hours, whereas glyphosate damage (Run 2) first became visible (leaf yellowing) after three days. Both compositions showed substantial re-growth after 28 days.

The combination of (a) acetic acid and citric acid at the registered rate with (b) the regular rate of glyphosate (Run 3) resulted in very rapid top kill (24 hours) plus 100% control of re-growth i.e. there was no re-growth after 28 days. Very similar results were obtained using even lower rates of acetic acid and citric acid with half the recommended rate of glyphosate (Run 4).

The treatments of this Example clearly show synergistic response of the combinations, which essentially eliminated top growth and re-growth at substantially below presently used application rates.

### Example II

Well established dandelions were transplanted from the field to individual 5 inch plastic pots, using the original field soil. The dandelions were allowed to re-establish themselves for a period of at least 8 weeks in a greenhouse.

After the top growth of the dandelion had completely covered the soil surface, the plants were subjected to treatment with herbicidal compositions in the greenhouse. Each plant was sprayed with a herbicidal composition using the procedure of Example I, and observations were recorded. The results are shown in Table II.

**Table II:**

| **Greenhouse Results - Dandelions:** | | | |
|---|---|---|---|
| **Run** | **Solution** | **% Top Kill (7 days)** | **% Regrowth (28 days)** |
| 5 | 50 g aa + 25 g ca + 10 g SN-90/1000 ml water | 100 | 10 |
| 6 | 50 g aa + 25 g ca + 50 g SN-90/1000 ml water | 100 | 5 |
| 7 | 50 g aa + 25 g ca + 10 g Sponto/1000 ml water | 90 | 75 |
| 8 | 50 g SN-90/1000 ml water | 95 | 100 |
| 9 | 10 g SN-90/1000 ml water | 30 | 100 |
| 10 | 10 g Sponto/1000 ml water | 0 | 100 |
| 11 | 12.5 g aa + 6.25 g ca + 10 g SN-90 + 3.5 g glyphosate/1000 ml water | 100 | 0 |

The results in the greenhouse showed that the combination of acetic and citric acids with SN-90 resulted in better re-growth control, especially when Run 5 is compared to Run 7. Run 5 provides 90% re-growth control as compared only to 25% control in Run 7.

Runs 8 and 9 indicate that the surfactant SN-90 alone is herbicidal. Run 11 indicates synergistic activity of combinations resulting in 24 hour top kill and complete re-growth control of dandelions.

## Claims

1. A herbicidal composition comprising a combination of glyphosate, acetic acid, citric acid and surfactant in aqueous solution, said composition exhibiting synergistic herbicidal activity in comparison with aqueous solutions of any of (i) glyphosate, (ii) acetic acid in combination with citric acid and (iii) surfactant at the same concentration.

2. The herbicidal composition claimed in claim 1, wherein the amount of glyphosate is less than 5 g/l.

3. The herbicidal composition claimed in claim 2, wherein the amount of glyphosate is less than 4 g/l.

4. The herbicidal composition claimed in any one of claims 1 to 3, wherein the weight ratio of acetic acid to citric acid is in the range of 10:1 to 1:1.

5. The herbicidal composition of claim 4, wherein the weight ratio of acetic acid to citric acid is in the range of 4:1 to 1:1.

6. The herbicidal composition claimed in any one of claims 1 to 5, wherein the concentration of acetic acid is 1 to 100 g/l and the concentration of citric acid is 0.5 to 50 g/l.

7. The herbicidal composition claimed in any one of claims 1 to 6, wherein the concentration of acetic acid is 1 to 10 g/l.

8. The herbicidal composition claimed in any one of claims 1 to 7, wherein the concentration of surfactant is 0.1 to 40 g/l.

9. The herbicidal composition claimed in claim 8, wherein the concentration of surfactant is 1 to 5 g/l.

10. The herbicidal composition claimed in any one of claims 1 to 9, werein the surfactant is alkyl polyoxyethylene glycol ether and is present in a concentration of at least 10 g/l.

11. Use of a herbicidal composition comprising a combination of glyphosate, acetic acid, citric acid and surfactant in aqueous solution, said composition exhibiting synergistic herbicidal activity in comparison with aqueous solutions of any of (i) glyphosate, (ii) acetic acid in combination with citric acid and (iii) surfactant at the same concentration.

## Patentansprüche

1. Ein Herbizidgemisch bestehend aus einer Kombination von Glyphosat, Essigsäure, Zitronensäure und Tensid in aquatischer Lösung, wobei besagtes Gemisch eine synergistische herbizide Aktivität in Vergleich zu aquatischen Lösungen aus (i) Glyphosat, (ii) Essigsäure in Kombination mit Zitronensäure und (iii) Tensid derselben Konzentration aufweist.

2. Das Herbizidgemisch nach Anspruch 1, wobei die Glyphosatmenge weniger als 5 g/l beträgt.

3. Das Herbizidgemisch nach Anspruch 2, wobei die Glyophosatmenge weniger als 4 g/l beträgt.

4. Das Herbizidgemisch nach Anspruch 1 bis 3, wobei das Gewichtsverhältnis von Essigsäure zu Zitronensäure im Bereich von 10:1 bis 1:1 liegt.

5. Das Herbizidgemisch nach Anspruch 4, wobei das Gewichtsverhältnis von Essigsäure zu Zitronensäure im Bereich von 4:1 bis 1:1 liegt.

6. Das Herbizidgemisch nach Anspruchl bis 5, wobei die Konzentration von Essigsäure 1 bis 100 g/l und die Konzentration von Zitronensäure 0,5 bis 50 g/l beträgt.

7. Das Herbizidgemisch nach Anspruch 1 bis 6, wobei die Konzentration von Essigsäure 1 bis 10 g/l beträgt.

8. Das Herbizidgemisch nach Anspruch 1 bis 7, wobei die Tensidkonzentration 0,1 bis 40 g/l beträgt.

9. Das Herbizidgemisch nach Anspruch 8, wobei die Tensidkonzentration 1 bis 5 g/l beträgt.

10. Das Herbizidgemisch nach Anspruch 1 bis 9, wobei das Tensid Alkylpolyoxyethylenglykolether und in einer Konzentration von mindestens 10 g/l vorhanden ist.

11. Die Verwendung eines Herbizidgemischs bestehend aus einer Kombination von Glyphosat, Essigsäure, Zitronensäure und Tensid in aquatischer Lösung, wobei besagtes Gemisch eine synergistische herbizide Aktivität in Vergleich zu aquatischen Lösungen aus (i) Glyphosat, (ii) Essigsäure in Kombination mit Zitronensäure und (iii) Tensid derselben Konzentration aufweist.

## Revendications

1. Une composition herbicide comprenant une combinaison de glyphosate, acide acétique, acide citrique et sulfatant dans une solution aqueuse, dite composition démontrant une activité herbicide synergique par comparaison à des solutions aqueuses de n'importe quel (i) glyphosate, (ii) acide acétique en combinaison avec acide citrique et (iii) sulfatant d'une même concentration.

2. La composition herbicide prétendue à la prétention 1, où la quantité de glyphosate est inférieure à 5 g/l.

3. La composition herbicide prétendue à la prétention 2, où la quantité de glyphosate est inférieure à 4 g/l.

4. La composition herbicide prétendue à n'importe quelle prétention de 1 à 3, où le rapport de poids entre l'acide acétique et l'acide citrique peut se trouver dans la série de 10:1 à 1:1.

5. La composition herbicide de la prétention 4, où le rapport de poids entre l'acide acétique et l'acide citrique peut se trouver dans la série de 4:1 à 1:1.

6. La composition herbicide prétendue à n'importe quelle prétention de 1 à 5, où la concentration d'acide acétique est de 1 pour 100 g/l et la concentration d'acide citrique est de 0,5 à 50 g/l.

7. La composition herbicide prétendue à n'importe quelle prétention de 1 à 6, où la concentration d'acide acétique est de 1 pour 10 g/l et la concentration d'acide citrique est de 0,5 à 50 g/l.

8. La composition herbicide prétendue à n'importe quelle prétention de 1 à 7, où la concentration de sulfatant est de 0,1 à 40 g/l.

9. La composition herbicide prétendue à la prétention 8, où la concentration de sulfatant est de 1 à 5 g/l.

10. La composition herbicide prétendue à n'importe quelle prétention de 1 à 9, où la concentration de sulfatant est éther glycol polyoxyéthylène alkyle et se trouve présent dans une concentration de 10 g/l du moins.

11. Utilisation d'une composition herbicide comprenant une combinaison de glyphosate, acide acétique, acide citrique et sulfatant dans une solution aqueuse, dite composition démontrant une activité herbicide synergique par comparaison à des solutions aqueuses de n'importe quel (i) glyphosate, (ii) acide acétique en combinaison avec acide citrique et (iii) sulfatant d'une même concentration.
